# EUROPEAN PATENT APPLICATION

(11) **EP 1 916 852 A1**
(43) Date of publication of application: **30.04.2008**
(21) Application number: 05780646.5
(22) Date of filing: 18.08.2005
(51) Int. Cl.: H04Q 7/28

(54) **METHOD FOR ADDRESSING BROADCAST MESSAGE IN TRUNK SYSTEM**

(71) Applicant: ZTE Corporation, 518057 Shenzhen City, Guandong Province (CN)
(72) Inventor: CHEN, Yan Ye, 518057 Shenzhen, Guangdong Province (CN); LIU, Xue Min, 518057 Shenzhen, Guangdong Province (CN); ZHANG, Chen Guang, 518057 Shenzhen, Guangdong Province (CN); HOU, Xiao Xia, 518057 Shenzhen, Guangdong Province (CN)
(74) Representative: Garratt, Peter Douglas
(86) International application number: PCT/CN2005/001294
(87) International publication number: WO 2007/019731

(57) **Abstract**

The method of present invention is used for addressing broadcast message in trunk system, in which said trunk communication system includes base station mobile station. Said method includes the following steps: adding an index of trunk broadcast time slot newly, all the mobile stations that support boundless capacity group call service monitor these trunk broadcast time slots; the paging message of the boundless capacity group call transmitted by said base station being sent in the trunk broadcast time slot, which uses the group identification as the broadcast address, and address according to the group identification,not address to a single mobile station. The method of present invention efficiently solves the problem of paging channel capacity limitation of the boundless capacity group call service supported by CDMA trunk telecommunication system, and greatly shorten the time of group callconnection.

## Description

### Technical Field

The present invention relates to a mobile communication technology and especially, relates to an addressing method in CDMAtrunk communication system.

### Background of the Invention

In the prior art, the CDMA trunk communication system combines the CDMA technology with a dedicated dispatching communication system and employs the halfduplex communication method, which can achieve quick connection and support a group call method of one-to-many.

In the CDMA trunk communication system, the addressing method for an air interface paging message is generally that a mobile station (MS) identification such as IMSI is carried in a paging channel message (such as the common paging message) which is transmitted by a base station (BSS) and is sent to a designated mobile station. Generally, such CDMA trunk communication system which has the addressing method for air interfaces corresponding to mobile stations one by one can achieve the requirementof a limited group call service of group users in each cell.

As for commanding and dispatching systems, such as public security fire fighting, mass gathering, and military dispatch, a large amount of users may generally gather in a certain region, for example, many thousands of users of a same group gather in a single cell, for thistype of dispatching systems which characterized in having large capacity and concentrated group dispatching region, according to the general practice, i.e., each mobile station is paged individually when a group is built, then almost at the same time, a single paging channel has to transmit many thousands of paging messages, thereby absolutely rendering the paging channel hard to bear the heavy load. Up to the present, there is no efficient solution for the addressing method in the boundless capacity group call service.

### Summary of the Invention

The present invention aims to provide a method for addressing broadcast message in trunk system by adding an index of trunk broadcast time slot newly, all the mobile stations that support a boundless capacity group call service must monitor these trunk broadcast time slots; the paging message of the boundless capacity group call transmitted by said base station is sent in the trunk broadcast time slot, which uses the group identification as the broadcast address, and address according to the group identification, not address to a single mobile station, so as to overcome the limitation on the paging channel capacity, and decrease the impact of the boundless capacity group call service to the paging channel.

The technical solution of the present invention comprises the following:
a method for addressing broadcast message in a trunk system, and said trunk communication system includes a base station and a mobile station; said method comprises the following steps:
   adding a trunk broadcast time slot newly, all the mobile stations that support the group call service monitor the trunk broadcast time slots; the paging message of the group call transmitted by said base station is sent in the trunk broadcast time slot, which uses the group identification as the broadcast address, and address according to the group identification, not address to a single mobile station.

Said method further comprises the following specific steps:
A. adding an index of said trunk broadcast time slot in an operation and maintenance center of the base station, and calculating the trunk broadcast time slot according to the index of the trunk broadcast time slot;
B. the base station notifies the mobile station of the index of the trunk broadcast time slot by the overhead message of the trunk communication system;
C. when the base station system transmits a paging message of a called, the group identification is used as the broadcast address, and the paging message which addresses according to the group is sent in the trunk broadcast time slot; and
D. the mobile stations monitors all the trunk broadcast time slots, if the paging message is received, then matches the group identification with the identification stored by the mobile station itself, and judges whether access to the group or not.

Said method further comprises the following:
for a mobile station in a call service state, a user property information is dynamically updated directly; for a mobile station in an idle state, a call will firstly be made, thereby the mobile station enters the call service state, and then the user property information is updated.

Said method further comprises the following:
A1. said dispatching server sending a user property update message carrying the user property information which needs to be modified and modified user identification, and also carrying the information about the group which the mobile station belongs to,to the base station system;
A2. said base station system constructing the user property update message of an air interface and sending the same to each mobile station;
A3. according to the requirements in the user property update message, the mobile station, after carrying out corresponding operations such as adding, modifying, deleting and synchronizing, returning a user property update answer message which carrying the results of the updating to the base station system;
A4. the user property update answer message of the interface A is constructed and sent to the dispatching server by the base station system; and
A5. the dispatching server judges whether the updating of the user property is completed, if the mobile station is in the call service state before updating the user property, the call process continuing; if the mobile station is in the idle state before updating the user property then releasing the present call.

In the method, the group identification which serves as the broadcast address is the coding method for a short number, and it only carries a local network identification and a group identification distributed by the operator

In the method, the group identification as the broadcast address is the coding method of a long number, it is used for carrying a country code, a mobile network number, an operator identification code, a local network identification and a group identification distributed by the operator, and a group identification type.

Compared with the prior art, the method for addressing broadcast message in trunk system provided by the present invention efficiently solves the problem of paging channel capacity limitation that exist in the boundless capacity group call service supported by the CDMA trunk communication system, and meanwhile, as address according to the group, all the users in a group can receive the paging message in a short time, thereby greatly shortening the connection time of a group call. The method for addressing broadcast message according to the present invention, can not only be applied to the boundless capacity group call service, but also to other group call services in a trunk system.

### Brief Description of the Accompanying Drawings

Figure 1 is a schematic view of the CDMA trunk communication system according to the embodiment of the method of the present invention; and
Figure 2 is a signaling flow chart of the dynamic update of user property information and the addressing method of a broadcast message in the CDMA trunk communication system according to the method of the present invention.

### Embodiments for Carrying Out the Present Invention

The method according to the present invention is further described in details with reference to the accompanying drawings thereof.

The method for addressing the broadcast message in the CDMA trunk communication system according to the present invention, wherein, the trunk communication system, which is mainly related to, includes entities such as a base station (BSS) and a mobile station (MS). The method comprises the following steps:
step 1. adding an index of a trunk broadcast time slot in the operation and maintenance center of the base station, and calculating the trunk broadcast time slot according to the index of the trunk broadcast time slot;
step 2. the base station notifying the mobile station of the index of the trunk broadcast time slot by the overhead message of the trunk communication system;
step 3. when the base station BSS transmits paging message of a called, using the group identification as the broadcast address and sending the paging message which addresses according to the group in the trunk broadcast time slot; and
step 4. the mobile station monitoring all the trunk broadcast time slots, if the paging message is received, then matching the group identification with the identification stored by the mobile station itself, and judging whether access to the group or not.

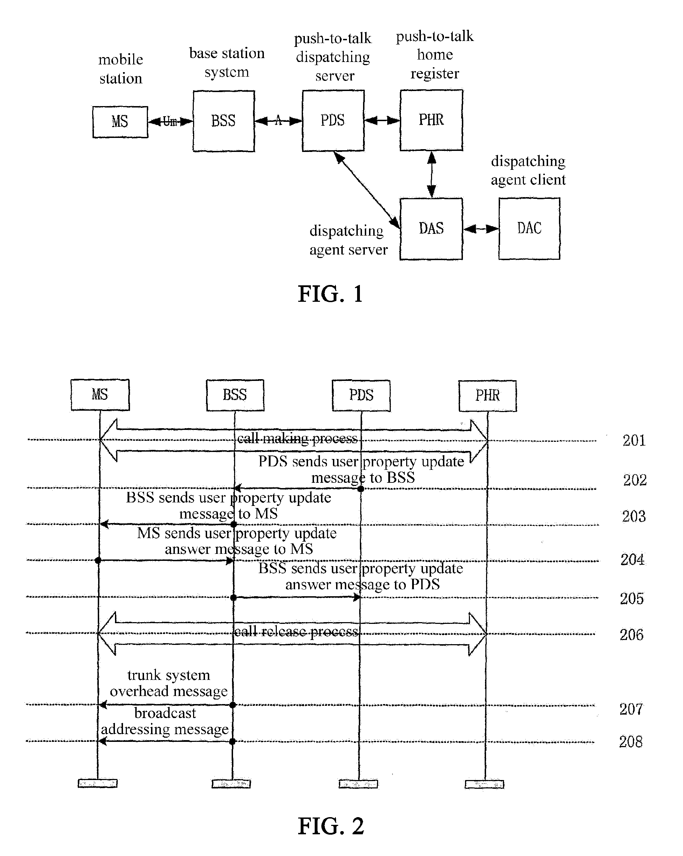

As shown in figure 1, the CDMA trunk communication environment that supports the boundless capacity group call service of the present invention is illustrated, the related trunk system includes entities such as a mobile station (MS), a base station system (BSS), a push-to-talk dispatching server (PDS), a dispatching agent server (DAS), a dispatching agent client (DAC), and a push-to-talk home register (PHR).

As shown in figure 2, figure 2 is a signaling flow chart illustrating dynamic update of user property information and the method for addressing broadcast message in the boundless group call service in the CDMA trunk communication system according to the present invention. The entities mainly related to the method of the present invention include MS,BSS, PDS, and PHR. In the method for addressing broadcast message, because the mobile station needs to match the group identification carried in a broadcast paging message with the group identification stored by itself, and then determines whether to connect the call or not, therefore, in the embodiment of the present invention, before addressing the broadcast message, the group identification should be firstly stored in the mobile station by the method of dynamically updating the user property information.

The method according to the present invention will be described below, by taking the communication system based on CDMA as an example, and the method includes the following specific steps:
step 201: for a mobile station in a call service state, dynamically updating the user property information directly; for a mobile station in an idle state, making a call firstly so that the mobile station enters in the call service state, and then the user property information is updated;
step 202: a user property update message is sent to the BSS by the PDS, the user property update message carries the user property information that needs to be modified and a modified user identification, and the message carries the relevant information about the identification of the group where the mobile station is;
step 203: the user property update message of an air interface is constructed and sent to the mobile station by the BSS;
step 204: according to the requirements in the user property update message, corresponding operations such as adding, modifying, deleting and synchronizing are carried out by the mobile station, and then a user property update answer message which carrying the update results is returned to the BSS by the mobile station;
step 205: the user property update answer message of the interface A is constructed and sent to the PDS by the BSS;
step 206: the PDS judges that the user property update has been accomplished, if the mobile station is in the call service state before updating the user property the call process continuing; if the mobile station is in the idle state before updating the user property the present call is released; now the mobile station stores a list of the group identifications;
step 207: the base station system adds an index of the trunk broadcast time slot in the operation and maintenance center, and the base station calculates the trunk broadcast time slot according to the index of the trunk broadcast time slot; the base station sends a trunk system overhead message periodically, which carries the index of the trunk broadcast time slot; the mobile station monitors all the trunk broadcast time slots according to the index of the trunk broadcast time slot; and
step 208: a boundless capacity group call paging message is sent by the base station, the message being sent in the trunk broadcast time slots, taking the trunk identification as the broadcast address and addressing according to the group; when the mobile station monitors a broadcast paging message in the trunk broadcast time slots, taking out the group identification, matching the same with the group identification stored in the mobile station itself, and then judging whether to connect it to the group or not.

In the method for addressing broadcast message in the trunk system according to the present invention, the group identification as the broadcast address may have two kinds of coding methods:
(1) short number: only carrying the local network identification such as the PHR identification code and the group identification distributed by the operator. The length of the broadcast addressing paging message canbe shortened and the paging channel overhead can be decreased by using the short number; and
(2) long number: carrying a country code, a mobile network number, an operator identification code, a local network identification distributed by the operator, a group identification, and a group identification type, etc.; international roaming can be supported by using the long number.

The above method for addressing broadcast message employed in the CDMA trunk communication system according to the present invention achieves the requirement of boundless capacity group call service, and decreases the impact of the boundless capacity group call service to the paging channel; meanwhile, as addressing according to the group, all the users in a group can receive the paging message in a short time, thereby the connection time of group call is greatly shortened. The method for addressing broadcast message according to the present invention can not only be applied to the boundless capacity group call service, but also to other group services in the trunk system.

However, it should be understood that the above are detailed description of specific embodiments and shall not be understood as limitations to the protection scope of the present application for a patent for invention, and the protection scope of the present invention shall be defined the appended claims.

## Claims

1. A method for addressing broadcast message in a trunk system, the trunk communication system includes a base station and a mobile station; the method includes the following steps:
adding a trunk broadcast time slot newly, all the mobile stations that support group call service monitor the trunk broadcast time slots; the paging message of the group call transmitted by said base station is sent in the trunk broadcast time slot, which uses the group identificationas the broadcast address, and address according to the group identification.

2. The method according to claim 1, **characterized in that** the method further comprises the following specific steps:
A. adding an index of the trunk broadcast time slot in an operation and maintenance center of the base station, and calculating the trunk broadcast time slot according to the index of the trunk broadcast time slot;
B. the base station notifies the mobile station of the index of the trunk broadcast time slot by an overhead message of the trunk communication system;
C. when the base station system transmits a paging message of a called, it uses the group identification as a broadcast address and sends the paging message whichaddresses according to the group in the trunk broadcast time slot; and
D. the mobile station monitors all the trunk broadcast time slots, if the paging message is received, then matches the group identification with the identification stored by the mobile station itself, and judges whether to connect into the group or not.

3. The method according to claim 1, **characterized in that** the method further comprises:
for a mobile station in a call service state, dynamically updating user property information directly; for a mobile station in an idle state, making a call firstly so that the mobile station enters in the call service state, and then the user property information is updated.

4. The method according to claim 1, **characterized in that** the method further comprises of:
A1. a user property update message carrying the user property information that needs to be modified and a modified user identification is sent to the base station system by the dispatching server, and the message carries the information about the identification of the group where the mobile station is;
A2. the user property update message of an air interface is constructed and sent to each mobile station by the base station system;
A3. according to the requirements in the user property update message, the corresponding adding, modifying, deleting and synchronize operation is carried out by the mobile station, and then the mobile station returns a userproperty update answer message carrying the update results to the base station system;
A4. a user property update answer message of the interface A is constructed and sent to the dispatching server by the base station system; and
A5. the dispatching server judges whether the user property updating is accomplished, if the mobile station is in a call service state before updating the user property, the call process is continued; if the mobile station is in an idle state before updating the user property then the present call is released.

5. The method according to claim 1, **characterized in that** the group identification which serves as the broadcast address is the coding method for a short number, and only carries the local identification and the group identification distributed by the operator

6. The method according to claim 1, **characterized in that** the group identification which serves as the broadcast address is the coding method for a long number, and carries a country code, a mobile network number, an operator identification code, a local identification and a group identification distributed by the operator, and a group identificationtype.
